# EUROPÄISCHE PATENTSCHRIFT

(11) **EP 4 055 076 B1**
(45) Veröffentlichungstag und Bekanntmachung des Hinweises auf die Patenterteilung: **12.03.2025**
(21) Anmeldenummer: 20807273.6
(22) Anmeldetag: 04.11.2020
(51) Int. Cl.: C08G 18/79, C08G 18/42, C08G 18/67, C08G 18/24, C08F 290/06, C09D 175/06

(54) **VERBESSERTE DUALCURE-BESCHICHTUNGSSTOFFE UND DEREN VERWENDUNG**
IMPROVED DUAL-CURE COATING MATERIALS AND USE THEREOF
MATÉRIAUX DE REVÊTEMENT À DOUBLE DURCISSEMENT AMÉLIORÉ ET UTILISATION ASSOCIÉE

(30) Priorität: 08.11.2019 DE 102019130267
(43) Veröffentlichungstag der Anmeldung: 14.09.2022
(73) Patentinhaber: Mankiewicz Gebr. & Co. (GmbH & Co. KG), 21107 Hamburg (DE)
(72) Erfinder: DE ROSSI, Umberto, 22844 Norderstedt (DE); HOTH, Claudia, 22587 Hamburg (DE); TOPP, Ilka-Marina, 21465 Reinbek (DE)
(86) Internationale Anmeldenummer: PCT/DE2020/100941
(87) Internationale Veröffentlichungsnummer: WO 2021/089086

(56) Entgegenhaltungen:
- EP-A1- 2 868 681

## Beschreibung

Die Erfindung betrifft Beschichtungsstoff-Zusammensetzungen auf der Basis von Dualcure-Systemen, daraus herstellbare Beschichtungen sowie deren Verwendung zur Beschichtung von Bauteilen und Gegenständen, insbesondere von großen Maschinen und Fahrzeugen wie Schiffen, Flugzeugen oder Schienenfahrzeugen. Sie betrifft weiterhin Beschichtungssysteme und Schichtaufbauten wie z.B. Basecoat-Clearcoatsysteme, welche die erfindungsgemäßen Beschichtungen enthalten.

In der Regel werden die äußeren Oberflächen von Apparaten, Maschinen und Fahrzeugen beschichtet. Die aufgebrachten Beschichtungen dienen zum einen dem Schutz der Oberflächen vor Umwelteinflüssen, zum anderen können durch die Beschichtungen Oberflächen in gewünschter Weise gestaltet und dekoriert werden. Zur Lackierung von Fahrzeugen und Maschinen werden üblicherweise Basecoat-Clearcoat-Beschichtungssysteme eingesetzt. Diese Beschichtungssysteme weisen zumindest eine Beschichtung als Basislack, welcher auch als Basecoat bezeichnet wird, auf. Auf dem Basislack wird zumindest eine weitere Beschichtung als Klarlack, welcher auch als Clearcoat bezeichnet wird, aufgebracht.

Als Basislack oder Basecoat werden im Allgemeinen die farbgebenden Beschichtungsstoffe bezeichnet. Als Klarlack oder Clearcoat werden Beschichtungsstoffe bezeichnet, welche nach Applikation und Aushärtung eine transparente Beschichtung ergeben. Klarlacke enthalten in der Regel keine Pigmente oder Füllstoffe, um die Transparenz der Beschichtung nicht zu beeinträchtigen. Klarlacke werden in Beschichtungssystemen üblicherweise zur Herstellung der letzten, abschließenden Schicht verwendet, um die darunter liegenden Schichten zu schützen und den Glanz zu verbessern.

Klarlackschichten sollen vor allem Schutz gegen mechanische Beschädigungen und Witterungseinflüssen bieten. Besonders stabile Klarlackschichten werden durch den Einsatz von Dualcure-Systemen erhalten. Unter dem Begriff Dualcure oder Dualcure-System werden im Folgenden Beschichtungsstoffe verstanden, deren Bindemittel durch zwei unterschiedliche Vernetzungsreaktionen aushärten.

Bekannt sind Dualcure-Beschichtungsstoffe, die durch Polyurethanbildung aus Polyolen und Isocyanaten aushärten und zusätzlich durch UV-induzierte, radikalische Polymerisation von Arcrylsäureestern vernetzen. Durch die Bestrahlung mit UV-Licht wird eine schnelle Härtung in den bestrahlten Bereichen erreicht. In den Schattenbereichen wird im Unterschied zu ausschließlich strahlungshärtenden Systemen eine ausreichende Vernetzung durch die zweite, strahlungsunabhängige Reaktion erhalten.

Bekannt sind Beschichtungsstoff-Zusammensetzungen, die als Bindemittel Verbindungen mit OH-Gruppen und ungesättigten Strukturen wie Acryloyl-, Vinyl- oder Methacryloyl-Gruppen und als Härter Isocyanate enthalten. EP 2868681 A1 beschreibt strahlungshärtbare Beschichtungsmittel, die neben einem Urethanacrylat als Hauptkomponente zusätzlich einen acryloylfunktionellen Amin-Synergisten enthalten. Um den Umsetzungsgrad zu erreichen, der für die geforderte Beständigkeit der Beschichtung notwendig ist, müssen die bekannten Systeme jedoch bei erhöhten Temperaturen ausgehärtet werden. Die Aushärtung erfolgt in der Regel über eine forcierte Trocknung oder Ofentrocknung. Damit können große Teile wie Kraftfahrzeuge, Schiffe, Luft- und Schienenfahrzeugen mit den bekannten Dualcure-Klarlacken nur eingeschränkt beschichtet werden, abhängig von der Größe der verfügbaren Öfen.

Zur Aushärtung der bisher bekannten Beschichtungsstoff-Zusammensetzungen werden zur Erzeugung der UV-Strahlung übliche Quecksilbermitteldrucklampen eingesetzt. Diese Lampen sind durch ihren hohen Energieverbrauch und die unerwünschte Abwärme nachteilig. Darüber hinaus wird durch das breite Emissionsspektrum dieser Lampen auch Strahlung kurzwelliger Bereiche emittiert, so dass aufwendige Schutzmaßnahmen beim Einsatz dieses Verfahrens erforderlich sind.

Die Verwendung von LEDs als Strahlungsquelle für die Aushärtung von Beschichtungsstoff-Zusammensetzungen, welche durch strahlungsinduzierte radikalische Polymerisation vernetzen, ist an sich bekannt. Bisher können Dualcure-Systeme jedoch nicht durch LED-erzeugte Strahlung gehärtet werden, da der Energieeintrag durch diese Strahlung zu gering ist, um eine ausreichende Vernetzung zu bewirken. Es ist daher Aufgabe der vorliegenden Erfindung verbesserte Dualcure-Beschichtungsstoffe zur Verfügung zu stellen, welche die Nachteile der bekannten Systeme überwinden.

Die Aufgabe wird gelöst durch Beschichtungsstoff-Zusammensetzungen gemäß Hauptanspruch. Die Aufgabe wird weiterhin gelöst durch Beschichtungssysteme gemäß Nebenanspruch. Weitere Ausführungsformen offenbaren die Unteransprüche und die Beschreibung.

Die erfindungsgemäße Beschichtungstoff-Zusammensetzung umfasst zumindest eine Komponente A und eine Komponente B, wobei Komponente A das oder die Bindemittel enthält und Komponente B den oder die Härter.

Die Komponente A der erfindungsgemäßen Beschichtungsstoff-Zusammensetzung enthält, jeweils bezogen auf ihr Gesamtgewicht,
40 bis 70 Gew.-%, bevorzugt 30 bis 60 Gew.-%,
ein oder mehrere Polyole (a),
2 bis 10 Gew.-%, bevorzugt 2,5 bis 6 Gew.-%, ein oder mehrere OH-funktionelle ungesättigte aliphatische Urethanacrylate (b),
0,2 bis 5 Gew.-%, bevorzugt 0,4 bis 2 Gew.-%, ein oder mehrere Photoinitiatoren (c) sowie
eine Kombination aus Amin-Synergisten (d) aufweisend
1 bis 10 Gew.-%, bevorzugt 2 bis 8 Gew.-%, besonders bevorzugt 3 bis 5 Gew.-%, ein oder mehrere
aycryloylfunktionelle Amin-Synergisten (d1) mit Aminzahlen im Bereich von 130 bis 190 mg/g und
1 bis 10 Gew.-%, bevorzugt 2 bis 8 Gew.-%, besonders bevorzugt 3 bis 5 Gew.-%, ein oder mehrere
aycryloylfunktionelle Amin-Synergisten (d2) mit Aminzahlen im Bereich von 60 bis 105 mg/g.

Erfindungsgemäß wird eine Kombination aus zumindest zwei Amin-Synergisten (d1) und (d2) eingesetzt. Im Folgenden werden unter der Bezeichnung Amin-Synergisten tertiäre Amine mit α-ständigen CH-Gruppen verstanden, die als Hilfsstoffe zur Kettenübertragung bei radikalischen Polymerisationen eingesetzt werden. Die Amin-Synergisten (d1) und (d2) weisen dabei von einander verschiedene Aminzahlen auf. Die Aminzahl ist eine übliche Kennzahl für den Gesamtgehalt an protonierbaren oder basischen Stickstoffatomen einer Substanz. Sie gibt die Menge an Kaliumhydroxid in mg an, die ebensoviele Protonen einer sehr starken Säure binden kann wie 1 g der Substanz. Die Aminzahl wird üblicherweise durch potentiometrische Titration bestimmt. Erfindungsgemäß weisen Amin-Synergisten (d1) eine hohe Aminzahl im Bereich von 130 bis 190 mg/g, bevorzugt von 140 bis 180 mg/g, besonders bevorzugt von 145 bis 170 mg/g, ganz besonders bevorzugt von 150 bis 165 mg/g, und Amin-Synergisten (d2) eine niedrige Aminzahl im Bereich von 60 bis 105 mg/g, bevorzugt von 65 bis 100 mg/g, besonders bevorzugt von 70 bis 95 mg/g, ganz besonders bevorzugt von 75 bis 90 mg/g. Geeignete Amin-Synergisten sind acryloylfunktionelle oligomere Amine. Im Folgenden wird die Bezeichnung acryloylfunktionell für Substanzen verwendet, welche zumindest eine Acrylsäuregruppe (C₃H₃O-) aufweisen.

Unter der Funktionalität wird die Zahl der reaktiven Verknüpfungsstellen eines Moleküls verstanden, welche an der Polymerisationsreaktion beteiligt sind. Solche Verknüpfungstellen können beispielsweise funktionelle Gruppen wie Acrylolylgruppen (Acryloyl-Funktionalität) oder OH-Gruppen (OH-Funktionalität) sein. Die Funktionalität f wird berechnet als Produkt aus dem Zahlenmittel der Molmasse Mz und der Konzentration der funktionellen Gruppe c in mol/kg (f = c*Mz). Das Zahlenmittel der Molmasse Mz einer Substanz wird durch Gelpermeationschromatographie bestimmt.

Zur Bestimmung der OH-Funktionalität f(OH) wird die Konzentration der OH-Gruppen einer Substanz aus der OH-Zahl dieser Substanz errechnet. Die OH-Zahl oder Hydroxylzahl gibt die Menge Kaliumhydroxid in Milligramm an, die der Essigsäuremenge äquivalent ist, welche bei der Acetylierung von 1 Gramm Substanz gebunden wird. Die OH-Zahl wird mittels Titration bestimmt. Zur Bestimmung der Acryloyl-Funktionalität f(Ac) wird die Konzentration der Acryloylgruppen einer Substanz aus der Jod-Zahl dieser Substanz errechnet. Die Jodzahl gibt die Menge Jod in Gramm an, die an 100 g einer ungesättigten Substanz gebunden werden. Die Jod-Zahl wird mittels Titration bestimmt.

Erfindungsgemäß weisen die Amin-Synergisten (d1) Acryloyl-Funktionalitäten im Bereich zwischen 4 und 8 auf, bevorzugt im Bereich zwischen 4,5 und 7,5, besonders bevorzugt im Bereich zwischen 5 und 7. Die Amin-Synergisten (d2) weisen erfindungsgemäß Acryloyl-Funktionalitäten im Bereich zwischen 1 und 3,5 auf, bevorzugt im Bereich zwischen 1,5 und 3,0, besonders bevorzugt im Bereich zwischen 1,5 und 2,5.

Darüber hinaus weisen die Amin-Synergisten (d1) und (d2) Gardner Farbzahlen von kleiner 16, bevorzugt kleiner 12, besonders bevorzugt kleiner 8 auf. Die Gardener Farbzahl ist eine Farbzahl für die Kennzeichnung der Farbe von klaren Flüssigkeiten, die durch den visuellen Vergleich der Farbe einer Probe in einem Glasrohr mit der Farbe von definierten Standards ermittelt wird. Die Farbe der Probe, die dem jeweiligen Standard am nächsten kommt, wird als Gardener-Farbzahl bezeichnet. Als Bezugsstandard der Gardener-Farbskala dienen 18 Glasfarbstandards mit jeweils definierten Normfarbwertanteilen und Lichtdurchlässigkeiten.

Erfindungsgemäß geeignete Polyole (a) sind Polyacrylatpolyole, Polyesterpolyole, Polycarbonatpolyole, Polyacrylatpolyesterpolyole, Polyesterpolyole und deren Gemische. Bevorzugt sind Polyacrylatpolyole, Polyesterpolyole, Polyacrylatpolyesterpolyole und deren Gemische. Besonders bevorzugt sind Polyacrylatpolyesterpolyole. Das erfindungsgemäß einsetzte Polyol oder Polyol-Gemisch weist OH-Zahlen im Bereich zwischen 220 und 371 auf, bevorzugt im Bereich zwischen 250 bis 350, besonders bevorzugt im Bereich zwischen 280 bis 320. Das erfindungsgemäß eingesetzte Polyol oder Polyolgemisch weist darüber hinaus OH-Funktionalitäten im Bereich zwischen 2 und 4 auf, bevorzugt im Bereich zwischen 2 und 3,5, besonders bevorzugt im Bereich zwischen 2 und 3. Erfindungsgemäß geeignete OH-funktionelle ungesättigte aliphatische Urethanacrylate (b) weisen OH-Zahlen im Bereich zwischen 0,6 und 45 auf, bevorzugt im Bereich zwischen 5 und 30, besonders bevorzugt im Bereich zwischen 15 und 25. Weiterhin weisen die Urethanacrylate (b) OH-Funktionalitäten im Bereich zwischen 2 bis 6 auf, bevorzugt im Bereich zwischen 3 bis 5, besonders bevorzugt im Bereich zwischen 3,5 bis 4,5.

Erfindungsgemäß geeignete Photoinitiatoren (c) sind Phosphinoxide und/oder Phosphinate. Bevorzugt sind deren Gemische, besonders bevorzugt Phenyl-bis(2,4,6-trimethylbenzoyl)-phosphinoxid und Ethylphenyl(2,4,6-trimethylbenzoyl)phosphinat. Die eingesetzten Photoinitiatoren weisen Absorptionsmaxima zwischen 250 nm und 390 nm auf, bevorzugt zwischen 260 und 375 nm. Besonders bevorzugt weisen sie je ein Maximum im Bereich zwischen 275 und 365 nm und je ein Maximum im Bereich von 260 und 375 nm auf.

In einer weiteren Ausführungsform enthält Komponente A zusätzlich 0,001 bis 0,3 Gew.-% bezogen auf das Gesamtgewicht der Komponente A, bevorzugt 0,005 bis 1 Gew.-%, einen oder mehrere Katalysatoren für die OH-NCO-Reaktion. Geeignete Katalysatoren sind Zinnkomplexe mit organischen Liganden. Besonders bevorzugt sind Dibutylzinndilaurat und Dibutylzinndineodecanoat.

In einer weiteren Ausführungsform enthält Komponente A zusätzlich 0,001 bis 30 Gew.-% bezogen auf das Gesamtgewicht der Komponente A, bevorzugt 10 bis 30 Gew.-%, besonders bevorzugt 15 bis 30 Gew.-%, ein oder mehrere Verzögerer. Ein geeigneter Verzögerer ist Acetylaceton.

In einer weiteren Ausführungsform enthält Komponente A zusätzlich 0,001 bis 5 Gew.-% bezogen auf das Gesamtgewicht der Komponente A, bevorzugt 1 bis 5 Gew.-%, ein oder mehrere Reaktivverdünner. Im Folgenden werden unter dem Begriff Reaktivverdünner acryloylfunktionelle Verdünnungsmittel mit einer Viskosität kleiner als 50 mPa*s bei 25°C verstanden, welche bei der Aushärtung des Beschichtungsstoffs zum Bestandteil des Bindemittels werden. Erfindungsgemäß geeignete Reaktivverdünner sind mono-, di- und trifuntionelle Acrylate. Bevorzugt sind mono- und difunktionelle Acrylate. Besonders bevorzugt sind cyclisches Trimethylolpropanformalacrylat CTFA und Hexandioldiacrylat HDDA.

In einer weiteren Ausführungsform enthält Komponente A zusätzlich 0,001 bis 3 Gew.-% bezogen auf das Gesamtgewicht der Komponente A ein oder mehrere Lichtschutzmittel. Weiterhin kann die Komponente A bis zu 10 Gew.-% bezogen auf ihr Gesamtgewicht ein oder mehrere der üblichen, dem Fachmann bekannten Additive enthalten, wie beispielsweise oberflächenaktive Additive, Entschäumer und Rheologieadditive.

Die Komponente B (Härterkomponente) der erfindungsmäßen Zusammensetzung enthält ein oder mehrere aliphatische Polyisocyanate (e), bevorzugt 40 bis 100 Gew.-%, besonders bevorzugt 60 bis 95 Gew.-%, jeweils bezogen auf das Gesamtgewicht der Komponente B. Geeignete Polyisocyanate (e) sind alle üblicherweise zur Härtung von Beschichtungsstoffen eingesetzten Isocyanate wie zum Beispiel Polymere und Oligomere auf Basis von Hexamethylendiisocyanat (HDI), Isophorondiisocyanat (IPDI), 4,4'-Diisocyanato-dicyclohexylmethan (HMDI) und 1,6-Diisocyanatotrimethylhexan (TMDI). Auch Mischungen der genannten Isocyanate sind einsetzbar. Bevorzugt sind Polymere und Oligomere auf Basis von Hexamethylendiisocyanat (HDI) und/oder Isophorondiisocyanat (IPDI).

Komponente A, welche das Bindemittel enthält, und Komponente B, welche den Härter enthält, werden eingesetzt in einem molaren Verhältnis der OH-Gruppen des Bindemittels zu den NCO-Gruppen des Härters im Bereich von 1 : 0,8 bis 1 : 1,6, bevorzugt von 1 : 0,9 bis 1 : 1,3 besonders bevorzugt 1 : 0,9 bis 1 : 1,1.

In einer weiteren Ausführungsform kann die Zusammensetzung eine weitere Komponente C aufweisen, welche ein oder mehrere Lösungsmittel enthält. Geeignete Lösungsmittel sind die üblichen und dem Fachmann geläufigen Lösungsmittel wie beispielsweise Ether, Ester, aliphatische und aromatische Lösemittel. Bevorzugt sind Butylacetat, Xylol, 3-Methoxy-1-propylacetat, 3-Methoxy-1-butylacetat und deren Gemische.

Die erfindungsgemäßen Beschichtungsstoffe härten durch zwei voneinander unabhängige Vernetzungsreaktionen aus. In den Schattenbereichen bewirkt die Vernetzung durch Polyurethanbildung eine vollständige Aushärtung des Beschichtungsstoffes zu einer beständigen und stabilen Beschichtung. In den bestrahlten Bereichen wird eine schnelle Härtung durch radikalische Polymerisation erreicht, welche durch den strahlungsinduzierten Zerfall der Photoinitiatoren gestartet wird. Obwohl die erfindungsgemäßen Zusammensetzungen im Unterschied zu den bekannten Beschichtungsstoffen nur geringe Mengen an Photoinitiatoren benötigen, zeigen sie eine überraschend schnelle Oberflächentrocknung. Zusätzlich weisen sie eine reduzierte Sauerstoff-Inhibierung auf, so dass die Beschichtungsoberflächen auch bei einer Aushärtung in Luft ohne Schutzgasatmosphäre deutlich weniger klebrig sind als die der bekannten Dualcure-Beschichtungen. Durch den geringeren Anteil an Photoinitiatoren sind die erfindungsgemäßen Beschichtungen darüber hinaus vergilbungsarm.

Die erhaltenen erfindungsgemäßen Beschichtungen weisen auch bei geringen Trockenschichtdicken die erforderliche Oberflächengüte auf. So werden beispielsweise schon bei einer geringen Trockenschichtdicke von 35 µm die üblichen Standards für die Außenbeschichtung von Flugzeugen, Schienenfahrzeugen und Kraftfahrzeugen erreicht, insbesondere hinsichtlich Glanz und Verlauf. Darüber hinaus zeigen die erfindungsmäßen Beschichtungen trotz der hochgradigen Vernetzung, die üblicherweise sehr harte und spröde Beschichtungen ergibt, eine überraschende Flexibilität. Aufgrund dieser Eigenschaften können die erfindungsgemäßen Beschichtungsstoffe bevorzugt als Klarlacke verwendet werden, besonders bevorzugt als Klarlacke in Basecoat-Clearcoat-Beschichtungssystemen.

Im Unterschied zu den bisher bekannten Dualcure-Beschichtungsstoffen können die erfindungsgemäßen Beschichtungsstoffe durch den Einsatz vergleichsweise energiearmer Strahlung gehärtet werden. Zur Härtung können daher Lichtquellen wie z.B. LEDs einsetzt werden, die Strahlung im langwelligen UV-Bereich mit Wellenlängen zwischen 100 und 380 nm bis zum kurzwelligen, violetten Bereich des sichtbaren Lichts mit Wellenlängen zwischen 380 und 420 nm emittieren. Geeignet ist der Einsatz von Strahlung im Wellenlängenbereich zwischen 360 bis 420 nm, bevorzugt 380 bis 410 nm, besonders bevorzugt 390 bis 400 nm. Die erfindungsgemäß eingesetzte Bestrahlungsdosis liegt im Bereich von 1,0 bis 2,8 J/cm², bevorzugt 1,2 bis 2,5 J/cm², besonders bevorzugt 1,4 bis 2,0 J/cm², ganz besonders bevorzugt 1,5 bis 1,8 J/cm². Im Folgenden wird unter der Bestrahlungsdosis eine physikalische Größe verstanden, welche die einfallende Strahlungsenergie von elektromagnetischer Strahlung pro Fläche angibt. Die erfindungsgemäß eingesetzte Bestrahlungsintensität liegt im Bereich von 0,5 bis 8 W/cm², bevorzugt 1 bis 7,5 W/cm², besonders bevorzugt 3 bis 6,5 W/cm², ganz besonders bevorzugt 4 bis 6,5 W/cm². Unter der Bestrahlungsintensität oder Bestrahlungsstärke wird im Folgenden eine physikalische Größe verstanden, welche die gesamte Leistung der auf eine Oberfläche treffenden elektromagnetischen Energie pro Fläche angibt.

Die vollständige Aushärtung der erfindungsgemäßen Beschichtungsstoffe erfolgt im Anschluss an die Bestrahlung bei Raumtemperatur. Im Unterschied zu den bisher bekannten Beschichtungsstoffen ist keine Ofentrocknung erforderlich.

Das erfindungsgemäße Verfahren zur Herstellung einer Beschichtung, bevorzugt einer Klarlackschicht, umfasst daher die folgenden Schritte:
(i) Bereitstellen der Komponente A und der Komponente B der erfindungsgemäßen Beschichtungsstoff-Zusammensetzung
(ii) Mischen der Komponente A und der Komponente B zu einer homogenen Mischung,
(iii) Applizieren der Mischung auf ein Substrat,
(iv) Aushärten der applizierten Mischung durch Bestrahlung mit Strahlung im Wellenlängenbereich zwischen 360 bis 420 nm erzeugt durch LEDs,
(v) weiteres Aushärten bei Raumtemperatur.

In einer weiteren Ausführungsform kann in Schritt (ii) die oben beschriebene Komponente C, welche ein oder mehrere Lösungsmittel enthält, hinzugefügt werden.

Das Aushärten in Schritt (iv) erfolgt mit Bestrahlungsdosen im Bereich 1,0 bis 2,8 J/cm² und mit Bestrahlungsintensitäten im Bereich von 0,5 bis 8 W/cm².

Beim Einsatz als Klarlackbeschichtungsstoff zur Herstellung von Basecoat-Clearcoat-Beschichtungssystemen wird die aus Schritt (ii) erhaltene Mischung im Schritt (iii) auf eine Basecoatschicht appliziert .

Durch den Verzicht auf eine Ofentrocknung und die schnelle Härtung durch Bestrahlung zeigen die erfindungsgemäßen Beschichtungsstoffe kurze Trocknungszeiten und können insbesondere auf großen Bauteilen, für die in Regel eine Ofentrocknung nicht durchführbar ist, eingesetzt werden. So können ohne Weiteres auch sehr große Bauteile und komplette Maschinen und Fahrzeuge wie z.B. Flugzeuge, Schiffe und Schienenfahrzeuge beschichtet werden.

### Beispiele

### Klarlack-Zusammensetzungen

Erfindungsgemäßes Beispiel 1, Vergleichbeispiele V2 und V3

**Tabelle 1: Zusammensetzungen Komponente A**

| | **Menge in Gew.-%** | | |
|---|---|---|---|
| **Beispiel** | **1** | **V2** | **V3** |
| **Bestandteil** | | | |
| Aliphatisches Polyesterpolyol OHZ = 310 mg/g | 55 | 55 | 45 |
| Ungesättigtes aliphatisches Urethanacrylat f(Ac) = 4; OHZ = 21 mg/g | 5,5 | 5,5 | 15,5 |
| Acryloylfunktionelles oligomeres Amin Aminzahl = 84 mg/g als Aminsynergist | 4,5 | 0 | 4,5 |
| Acryloylfunktionelles oligomeres Amin Aminzahl = 152 mg/g als Aminsynergist | 3 | 7,5 | 3 |
| Ethylphenyl-(2,4,6-trimethylbenzoyl)phosphinat | 1 | 1 | 1 |
| Dibutylzinndilaurat | 0,2 | 0,2 | 0,2 |
| Acetylaceton | 28 | 28 | 28 |
| cyclisches Trimethylolpropan-formal-acrylat (CTFA) | 1,9 | 1,9 | 1, 9 |
| Lischtschutzmittel: 1:1-(Masse /Masse)-Gemisch aus Triazin-UV-Absorber und HALS (Hindered Amine Light Stabilizer) | 0,9 | 0,9 | 0, 9 |

**Tabelle 2: Zusammensetzung Komponente B**

| | **Menge in Gew.-%** | | |
|---|---|---|---|
| **Beispiel** | **1** | **V2** | **V3** |
| **Bestandteil Komponente B** | | | |
| Aliphatisches Polyisocyanat auf Basis von HDI-Isocyanurat mit einer IsocyanatKonzentration von 5,2 Mol/kg | 90 | 90 | 90 |
| Butylacetat | 10 | 10 | 10 |

### Herstellung der Probekörper

Zur Herstellung der Klarlacke für Beispiel 1, V2 und V3 wurden die Komponenten A und B gemischt, wobei die relativen Mengen an Komponente A und Komponente B jeweils so gewählt wurden, dass das molare Verhältnis der Hydroxylgruppen zu Isocyanatgruppen bei 1:1 lag.

Zur Herstellung der Probekörper wurden die Klarlacke gemäß der Beispiele 1, V2 und V3 auf Aluminiumbleche mit einer Stärke von 0,5 mm appliziert. Die Aluminiumbleche waren mit einem handelsüblichen Epoxy-Primer und einem handelsüblichen Polyurethan-Basecoat beschichtet. Die Klarlacke wurden mit einer Becherpistole so aufgesprüht, dass die ausgehärteten Klarlackschichten eine Trockenschichtdicke von 30 bis 35 µm aufwiesen. Nach dem Ablüften über eine Zeitspanne von 15 Minuten bei 23 °C, wurde die applizierte Klarlackschicht mittels Strahlung mit einem Intensitätsmaximum bei einer Wellenlänge von 395 nm ausgehärtet. Dabei wurde ein Heraeus Semray LED-Modul UVA2 verwendet. Die Bestrahlungsdosis betrug 1,6 J/cm² und die Bestrahlungsintensität betrug 6 W/cm².

### Prüfungen der Probekörper

Der Trockengrad der Beschichtungen wurde 15 Minuten und 60 Minuten nach Bestrahlung bei 23°C bestimmt. Der Trockengrad beschreibt den Trocknungszustand eines Beschichtungsstoffes nach der Applikation. Es wird zwischen den Trockengraden 1 bis 7 unterschieden. Zur Prüfung auf Trockengrad 1 wurden Glasperlen mit einem Drchmesser zwischen 125 µm und 250 µm auf die Beschichtung gestreut und deren Entfernbarkeit geprüft. Zur Prüfung der Trockengrade 2 bis 7 wurde auf die Beschichtung eine Papierscheibe mit einem Durchmesser von 26 mm und darauf eine Weichgummischeibe mit einem Durchmesser von 22°mm gelegt. Anschließend wurde die Weichgummischeibe 60 Sekunden lang mit einem Gewicht belegt. Danach wurde die Probe vom Gewicht entlastet und der Trockengrad wie folgt beurteilt:
Tg 1:
   Aufgestreute Glasperlen lassen sich mit einem Haarpinsel leicht und restlos wieder entfernen.
Tg 2:
   Nach einer Belastung mit 20g klebt das Papier nicht mehr an der Beschichtung.
Tg 3:
   Nach einer Belastung mit 200g klebt das Papier nicht mehr an der Beschichtung.
Tg 4:
   Nach einer Belastung mit 2kg klebt das Papier nicht mehr an der Beschichtung, unmittelbar nach Entlastung bleibt eine sichtbare Veränderung der Beschichtungsoberfläche.
Tg 5:
   Nach einer Belastung mit 2kg klebt das Papier nicht mehr an der Beschichtung, unmittelbar nach Entlastung bleibt keine sichtbare Veränderung der Beschichtungsoberfläche.
Tg 6:
   Nach einer Belastung mit 20kg klebt das Papier nicht mehr an der Beschichtung, unmittelbar nach Entlastung bleibt eine sichtbare Veränderung der Beschichtungsoberfläche.
Tg 7:
   Nach einer Belastung mit 20kg klebt das Papier nicht mehr an der Beschichtung, unmittelbar nach Entlastung bleibt keine sichtbare Veränderung der Beschichtungsoberfläche.

Nach der Bestimmung des Trocknungsgrads wurden die Probekörper 7 Tage bei Raumtemperatur unter Lichtausschluß gealtert. Nach der Alterung wurden folgende Untersuchungen durchgeführt.

Die Haftung der Beschichtungen wurde mittels Gitterschnitt geprüft. Dazu wurden in die Beschichtung auf dem Probekörper jeweils zwei Schnittbänder von je 6 Schnitten im rechten Winkel zueinander angebracht. Die Schnitte reichten dabei bis auf die Substratoberfläche. Nach dem Anbringen der Schnitte wurde die eingeschnittene Fläche definiert abgebürstet und anschließend unter definierten Bedingungen ein ruckartiger Klebebandabriss durchgeführt. Als Klebeband wurde Tesa-Band 4657, Fa. Beiersdorf, verwendet. Die Ergebnisse der Gitterschnitt-Prüfung wurden visuell wie folgt beurteilt:
Gt 0 glatte Schnittränder, keine Abplatzungen
Gt 1 bis zu 5% der Teilstücke sind abgeplatzt
Gt 2 bis zu 15 % der Teilstücke sind abgeplatzt
Gt 3 bis zu 35 % der Teilstücke sind abgeplatzt
Gt 4 über 65 % der Teilstücke sind abgeplatzt

Der Glanz der Beschichtungsoberfläche wurde als Reflektometerwert bestimmt. Der Reflektometerwert einer Probe ist definiert als das Verhältnis der von der Probenoberfläche und einer Glasoberfläche mit der Brechzahl 1,567 in Spiegelrichtung reflektierten Lichtströme. Die Messwerte wurden mit Hilfe eines üblichen Reflektometers im Winkel 60° bestimmt.

Die Bruchdehnung der Beschichtungen wurde im Dornbiegeversuch bestimmt. Dazu wurden die Probekörper um einen Dorn gebogen. Je kleiner der Radius des Dorns, um den die Platte ohne eine Beschädigung oder Bruch der Beschichtung gebogen werden kann, desto größer ist die Bruchdehnung der Beschichtung. Als Messwert wird der Durchmesser des Dorns angegeben.

Die Kratzbeständigkeit der Beschichtungsoberflächen wurde nach Erichsen untersucht. Dazu wurde ein Erichsen-Härteprüfstab Typ 318 und eine Prüfnadel aus Hartmetall, welche eine kugelförmige Prüfspitze mit einem Durchmesser von 0,75 mm aufweist, mit definierter Belastung über die zu untersuchende Oberfläche gezogen. Die Beurteilung des Ergebnisses erfolgt visuell, wobei die maximale Kraft angegeben wird, bei der noch kein Aufreißen der Beschichtung mit Materialabtrag beobachtet wird.

Weiterhin wurden die Bewitterungstabilität der Beschichtungen bestimmt. Dazu wurden die Probekörper einer künstlichen Bewitterung ausgesetzt, welche durch die zyklische Anwendung von Strahlung, Feuchtigkeit und erhöhter Temperatur eine Freibewitterung simuliert. Der Prüfzyklus aus Trocknungsphase und Kondensationsphase wurde 1500 Stunden lang wiederholt. In der Trocknungsphase wurden die Probekörper 4 Stunden mit einer QUV-B Lampe (Emmisionsmaximum bei 313 nm) bei 60°C Schwarztafeltemperatur bestrahlt. In der anschließenden 4-stündigen Kondensationsphase wurde bei 50°C Schwarztafeltemperatur Wasserdampf auf den Probekörpern kondensiert. Vor und nach der künstlichen Bewitterung wurden Glanz und Farbton der Beschichtungen bestimmt sowie die Farbtonveränderung, die als Farbabstand der Farbtöne vor und nach der künstlichen Bewitterung bestimmt wurde. Die Veränderung des Glanzes wurde als Restglanz, entsprechend dem Glanz nach der künstlichen Bewitterung in Prozent des Ausgangsglanzes vor der künstlichen Bewitterung berechnet.

Zur Farbtonbestimmung und Berechnung des Farbabstandes ΔE*_{ab} wird mit einem handelsüblichen Spektralphotometer das Reflexionsspektrum der Beschichtungsoberfläche bestimmt und dessen Farbort im CIELab-Farbraum berechnet. Der CIELab-Farbraum stellt ein räumliches Koordinatensystem dar, in dem jeder Farbton durch drei Maßzahlen eindeutig beschrieben wird. Der Wert L* ist ein Maß für die Helligkeit, auf der Schwarz-Weiß-Achse, der Wert a* ist ein Maß die Buntheit auf der Rot-Grün-Achse und der Wert b* ist ein Maß für die Buntheit auf der Gelb-Blau Achse. Der Farbabstand ΔE*_{ab} zweier Farbtöne ist definiert als der lineare Abstand der Farborte der beiden Farbtöne im CIElab-Farbraum.

Darüber hinaus wurde die Feuchtebeständigkeit bestimmt. Dazu wurden die Probekörper 14 Tage in destilliertem Wasser bei 23°C gelagert, dann mit einem Tuch trocken gewischt und anschließend für eine Stunde bei 23°C und 50% relativer Luftfeuchte gelagert. Danach wurden Haftung mittels Gitterschnitt und Kratzbeständigkeit nach Erichsen der Beschichtung wie oben beschrieben geprüft.

**Tabelle 3: Ergebnisse**

| **Beispiel** | **1** | **V2** | **V3** |
|---|---|---|---|
| Trockengrad | Tg 1 | Klebrig, Tg 1 nicht erreicht | Klebrig, Tg 1 nicht erreicht |
| 15 Minuten nach Bestrahlung | | | |
| Trockengrad | Tg 6 | Tg 4 | Tg 3 |
| 60 Minuten nach Bestrahlung | | | |
| Haftung, Gitterschnitt | Gt 0 | Gt 1 | Gt 2 |
| Bruchdehnung, Dorndurchmesser in mm | 6 | 6 | 10 |
| Kratzbeständigkeit in Newton | 20 | 12 | 15 |
| Glanz in Prozent vor künstlicher Bewitterung | 95 | 89 | 88 |
| Farbtonveränderung durch künstliche Bewitterung Farbabstand ΔE*_{ab} | 1,31 | 1, 98 | 2,13 |
| Glanz in Prozent nach künstlicher Bewitterung | 86 | 71 | 73 |
| Restglanz nach künstlicher Bewitterung in Prozent des Ausgangsglanzes | 90 | 80 | 82 |
| Haftung nach Wassereinlagerung, Gitterschnitt | Gt 0 | Gt 2 | Gt 4 |
| Kratzbeständigkeit nach Wasssereinlagerung in Newton | 20 | 10 | 12 |

Im Vergleich zu den nicht erfindungsgemäßen Beispielen V2 und V3 zeigt das erfindungsgemäße Beispiel 1
- eine reduzierte Sauerstoffinhibierung der Härtung, welche die geringere Klebrigkeit nach Strahlungshärtung bewirkt,
- eine schnellere Durchhärtung,
- eine stärkere Haftung zu Polyurethan-Basecoats,
- eine höhere Flexibilität bei gleichzeitiger verbesserter Kratzbeständigkeit
- einen besseren Verlauf, und daraus resultierend einen erhöhten Glanz bereits bei geringen Trockenschichtdicken,
- eine verbessserte Bewitterungsbeständigkeit, Glanzhaltung und Farbtonbeständigkeit sowie
- eine höhere Feuchtebeständigkeit.

## Patentansprüche

1. Beschichtungstoff-Zusammensetzung umfassend zumindest eine Komponente A und eine Komponente B, wobei Komponente A aufweist
40 bis 70 Gew.-% ein oder mehrere Polyole (a),
2 bis 10 Gew.-% ein oder mehrere OH-funktionelle ungesättigte aliphatische Urethanacrylate (b),
0,2 bis 5 Gew.-% ein oder mehrere Photoinitiatoren (c) sowie
eine Kombination aus tertiären Aminen mit α-ständigen CH-Gruppen als Amin-Synergisten aufweisend
1 bis 10 Gew.-% ein oder mehrere acryloylfunktionelle Amin-Synergisten (d1) mit Aminzahlen im Bereich von 130 bis 190 mg/g
und
1 bis 10 Gew.-% ein oder mehrere acryloylfunktionelle Amin-Synergisten (d2) mit Aminzahlen im Bereich von 60 bis 105 mg/g, jeweils bezogen auf das Gesamtgewicht der Komponente A,
und wobei Komponente B aufweist ein oder mehrere aliphatische Polyisocyanate (e).

2. Zusammensetzung nach Anspruch 1, **dadurch gekennzeichnet, dass** die Amin-Synergisten (d1) Acryloyl-Funktionalitäten im Bereich von 4 bis 8 aufweisen.

3. Zusammensetzung nach einem der voranstehenden Ansprüche, **dadurch gekennzeichnet, dass** die Amin-Synergisten (d2) Acryloyl-Funktionalitäten im Bereich von 1,5 bis 3 aufweisen.

4. Zusammensetzung nach einem der voranstehenden Ansprüche, **dadurch gekennzeichnet, dass** die Polyole (a) ausgewählt sind aus Polyacrylatpolyolen, Polyesterpolyolen, Polycarbonatpolyolen und deren Gemischen.

5. Zusammensetzung nach Anspruch 4, **dadurch gekennzeichnet, dass** die Polyole (a) OH-Zahlen zwischen 220 und 371 aufweisen.

6. Zusammensetzung nach Anspruch 4 oder 5, **dadurch gekennzeichnet, dass** die Polyole (a) OH-Funktionalitäten zwischen 2 und 4 aufweisen.

7. Zusammensetzung nach einem der voranstehenden Ansprüche, **dadurch gekennzeichnet, dass** die ungesättigten aliphatischen Urethanacrylate (b) OH-Funktionalitäten im Bereich von 2 bis 6 aufweisen.

8. Zusammensetzung nach Anspruch 7, **dadurch gekennzeichnet, dass** die ungesättigten aliphatischen Urethanacrylate (b) OH-Zahlen im Bereich von 0,6 bis 45 aufweisen.

9. Zusammensetzung nach einem der voranstehenden Ansprüche, **dadurch gekennzeichnet, dass** die Photoinitiatoren (c) Absorptionsmaxima zwischen 250 nm und 390 nm aufweisen.

10. Zusammensetzung nach Anspruch 9, **dadurch gekennzeichnet, dass** die Photoinitiatoren (c) ausgewählt sind aus Phosphinoxiden und Phosphinaten.

11. Zusammensetzung nach einem der voranstehenden Ansprüche, **dadurch gekennzeichnet, dass** die aliphatischen Polyisocyanaze (e) Polymere auf Basis von Hexamethylendiisocyanat (HDI), Isophorondiisocyanat (IPDI), 4,4'-Diisocyanato-dicyclohexylmethan (HMDI), 1,6-Diisocyanatotrimethylhexan (TMDI) und deren Gemische sind.

12. Zusammensetzung nach einem der voranstehenden Ansprüche, **dadurch gekennzeichnet, dass** die Komponente A und die Komponente B in einem molaren Verhältnis der OH-Gruppen der Komponente A zu den NCO-Gruppen der Komponente B von 1 : 0,8 bis 1 : 1,6 eingesetzt werden.

13. Zusammensetzung nach einem der voranstehenden Ansprüche, **dadurch gekennzeichnet, dass** die Zusammensetzung eine weitere Komponente C aufweist, welche ein oder mehrere Lösungsmittel umfasst.

14. Zusammensetzung nach einem der voranstehenden Ansprüche, **dadurch gekennzeichnet, dass** die Zusammensetzung weiterhin ein oder mehrere Katalysatoren für OH-NCO-Reaktionen enthält.

15. Zusammensetzung nach einem der voranstehenden Ansprüche, **dadurch gekennzeichnet, dass** die Zusammensetzung weiterhin ein oder mehrere Reaktivverdünner enthält.

16. Zusammensetzung nach einem der voranstehenden Ansprüche, **dadurch gekennzeichnet, dass** die Zusammensetzung weiterhin ein oder mehrere Verzögerer enthält.

17. Verwendung der Zusammensetzung nach einem der Ansprüche 1 bis 16 als Klarlackbeschichtungsstoff in Basecoat-Clearcoatsystemen.

18. Verfahren zur Herstellung einer Klarlackschicht aufwelsend die Schritte
(i) Bereitstellen der Beschichtungsstoff-Zusammensetzung nach einem der Ansprüche 1 bis 16,
(ii) Mischen der Komponente A und der Komponente B zu einer Mischung,
(iii) Applizieren der Mischung,
(iv) Aushärten der applizierten Mischung durch Bestrahlung mit Strahlung im Wellenlängenbereich zwischen 360 bis 420 nm,
(v) weiteres Aushärten bei Raumtemperatur.

19. Verfahren nach Anspruch 18, **dadurch gekennzeichnet, dass** in Schritt (ii) weiterhin die Komponente C mit den Komponenten A und B vermischt wird.

20. Verfahren nach Anspruch 18 oder 19, **dadurch gekennzeichnet, dass** in Schritt (iii) die Mischung auf eine Basecoatschicht appliziert wird.

## Claims

1. Coating material composition comprising at least one component A and one component B, with the component A having
40 to 70 wt.-% of one or more polyols (a),
2 to 10 wt.-% of one or more OH-functional unsaturated aliphatic urethane acrylates (b),
0.2 to 5 wt.-% of one or more photoinitiators (c) as well as
a combination of tertiary amines with CH groups in alpha position as amine synergists having
1 to 10 wt.-% of one or more acryloyl-functional amine synergists (d1) with amine numbers in the range of 130 to 190 mg/g
and
1 to 10 wt.-% of one or more acryloyl-functional amine synergists (d2) with amine numbers in the range of 60 to 105 mg/g, each based on the total weight of component A,
and with component B having one or more aliphatic polyisocyanates (e).

2. Composition according to claim 1, **characterised in that** the amine synergists (d1) have acryloyl functionalities in the range of 4 to 8.

3. Composition according to one of the preceding claims, **characterised in that** the amine synergists (d2) have acryloyl functionalities in the range of 1.5 to 3.

4. Composition according to one of the preceding claims, **characterised in that** the polyols (a) are selected from polyacrylate polyols, polyester polyols, polycarbonate polyols and mixtures thereof.

5. Composition according to claim 4, **characterised in that** the polyols (a) have OH numbers between 220 and 371.

6. Composition according to claim 4 or 5, **characterised in that** the polyols (a) have OH functionalities between 2 and 4.

7. Composition according to one of the preceding claims, **characterised in that** the unsaturated aliphatic urethane acrylates (b) have OH functionalities in the range of 2 to 6.

8. Composition according to claim 7, **characterised in that** the unsaturated aliphatic urethane acrylates (b) have OH numbers in the range of 0.6 to 45.

9. Composition according to one of the preceding claims, **characterised in that** the photoinitiators (c) have absorption maxima between 250 nm and 390 nm.

10. Composition according to claim 9, **characterised in that** the photoinitiators (c) are selected from phosphine oxides and phosphinates.

11. Composition according to one of the preceding claims, **characterised in that** the aliphatic polyisocyanates (e) are polymers based on hexamethylene diisocyanate (HDI), isophorone diisocyanate (IPDI), 4,4'-diisocyanato dicyclohexylmethane (HMDI), 1,6-diisocyanato trimethylhexane (TMDI) and mixtures thereof.

12. Composition according to one of the preceding claims, **characterised in that** the component A and the component B are used in a molar ratio of the OH groups of component A to the NCO groups of component B of 1 : 0.8 to 1 : 1.6.

13. Composition according to one of the preceding claims, **characterised in that** the composition further has a component C which comprises one or more solvents.

14. Composition according to one of the preceding claims, **characterised in that** the composition further contains one or more catalysts for OH-NCO reactions.

15. Composition according to one of the preceding claims, **characterised in that** the composition further contains one or more reactive diluents.

16. Composition according to one of the preceding claims, **characterised in that** the composition further contains one or more retarders.

17. Use of the composition according to any one of claims 1 to 16 as clear coat coating material in base coat - clear coat systems.

18. Method for the production of a clear coat layer comprising the steps
(i) providing the coating material composition according to any one of claims 1 to 16,
(ii) mixing component A and component B in order to obtain a mixture,
(iii) applying the mixture,
(iv) curing the applied mixture by exposure to rays having a wavelength range between 360 to 420 nm,
(v) further curing at room temperature.

19. Method according to claim 18, **characterised in that** in step (ii), additionally, component C is mixed with components A and B.

20. Method according to claim 18 or 19, **characterised in that** in step (iii) the mixture is applied to a base coat layer.

## Revendications

1. Composition de matériau de revêtement comprenant au moins un composant A et un composant B, le composant A présentant
40 à 70 % en poids d'un ou de plusieurs polyols (a),
2 à 10 % en poids d'un ou de plusieurs acrylates d'uréthane aliphatiques insaturés à fonctionnalité OH (b),
0,2 à 5 % en poids d'un ou de plusieurs photoinitiateurs(c)
ainsi qu'
une combinaison d'amines tertiaires avec des groupes CH en position alpha en tant que synergistes amines présentant
1 à 10 % en poids d'un ou de plusieurs synergistes amines à fonction acryloyle (d1) avec des indices d'amine entre 130 et 190 mg/g
et
1 à 10 % en poids d'un ou de plusieurs synergistes amines à fonctionnalité acryloyle (d2) avec des indices d'amine dans la gamme comprise entre 60 et 105 mg/g, chaque quantité étant exprimée par rapport au poids total du composant A,
et le composant B présentant un ou plusieurs polyisocyanates aliphatiques (e).

2. Composition selon la revendication 1, **caractérisée en ce que** les synergistes amines (d1) présentent des fonctionnalités acryloyle dans la gamme comprise entre 4 et 8.

3. Composition selon l'une des revendications précédentes, **caractérisée en ce que** les synergistes amines (d2) présentent des fonctionnalités acryloyle dans la gamme comprise entre 1,5 et 3.

4. Composition selon l'une des revendications précédentes, **caractérisée en ce que** les polyols (a) sont choisis parmi les polyols de polyacrylate, les polyols de polyester, les polyols de polycarbonate et leurs mélanges.

5. Composition selon la revendication 4, **caractérisée en ce que** les polyols (a) présentent des indices OH entre 220 et 371.

6. Composition selon la revendication 4 ou 5, **caractérisée en ce que** les polyols (a) présentent des fonctionnalités OH entre 2 et 4.

7. Composition selon l'une des revendications précédentes, **caractérisée en ce que** les acrylates d'uréthane aliphatiques insaturés (b) présentent des fonctionnalités OH dans la gamme comprise entre 2 et 6.

8. Composition selon la revendication 7, **caractérisée en ce que** les acrylates d'uréthane aliphatiques insaturés (b) présentent des indices OH dans la gamme comprise entre 0,6 et 45.

9. Composition selon l'une des revendications précédentes, **caractérisée en ce que** les photoinitiateurs (c) présentent des maxima d'absorption entre 250 nm et 390 nm.

10. Composition selon la revendication 9, **caractérisée en ce que** les photoinitiateurs (c) sont choisis parmi les oxydes de phosphine et les phosphinates.

11. Composition selon l'une des revendications précédentes, **caractérisée en ce que** les polyisocyanates aliphatiques (e) sont des polymères à base de diisocyanate d'hexaméthylène (HDI), de diisocyanate d'isophorone (IPDI), de 4,4'-diisocyanato-dicyclohexylméthane (HMDI), de 1,6-diisocyanatotriméthylhexane (TMDI) et leurs mélanges.

12. Composition selon l'une des revendications précédentes, **caractérisée en ce que** le composant A et le composant B sont utilisés dans un rapport molaire des groupes OH du composant A aux groupes NCO du composant B de 1 : 0,8 à 1 : 1,6.

13. Composition selon l'une des revendications précédentes, **caractérisée en ce que** la composition présente en outre un composant C qui comprend un ou plusieurs solvants.

14. Composition selon l'une des revendications précédentes, **caractérisée en ce que** la composition contient en outre un ou plusieurs catalyseurs pour des réactions OH-NCO.

15. Composition selon l'une des revendications précédentes, **caractérisée en ce que** la composition contient en outre un ou plusieurs diluants réactifs.

16. Composition selon l'une des revendications précédentes, **caractérisée en ce que** la composition contient en outre un ou plusieurs retardateurs.

17. Utilisation de la composition selon l'une quelconque des revendications 1 à 16 en tant que matériau de revêtement transparent dans des systèmes "couche de base - couche transparente".

18. Procédé pour la production d'une couche transparente comprenant les étapes suivantes
(i) fourniture de la composition de matériau de revêtement selon l'une quelconque des revendications 1 à 16,
(ii) mélange du composant A et le composant B pour obtenir un mélange,
(iii) application du mélange,
(iv) durcissement de ce dernier par irradiation où les rayons se trouvent dans la plage de longueurs d'onde entre 360 et 420 nm,
(v) durcissement supplémentaire à température ambiante.

19. Procédé selon la revendication 18, **caractérisé en ce qu'**en outre, dans l'étape (ii), le composant C est mélangé avec les composants A et B.

20. Procédé selon la revendication 18 ou 19, **caractérisé en ce que** dans l'étape (iii), le mélange est appliqué sur la couche de base.
